# EUROPEAN PATENT APPLICATION

(11) **EP 2 993 138 A2**
(43) Date of publication of application: **09.03.2016**
(21) Application number: 15002594.8
(22) Date of filing: 03.09.2015
(51) Int. Cl.: B65B 31/04, B65D 81/20

(54) **BAG EQUIPPED WITH A GAS CHANNEL AND A METHOD AND APPARATUS FOR PACKAGING SUCH A BAG**

(30) Priority: 05.09.2014 JP 2014181718
(71) Applicant: Toyo Jidoki Co., Ltd., Tokyo (JP)
(72) Inventor: Yasuyuki, Honda, Iwakuni-shi Yamaguchi-ken (JP)
(74) Representative: Schubert, Siegmar

(57) **Abstract**

A method and apparatus for packaging a bag (1) in which a gas channel (5) where the laminated films constituting the front and back faces of the bag are not fused is formed inside a sealed part (2) of the side edge, with the lower end of the gas channel opening (through a communicating portion (5b)) into the bag, and a gas inlet (5a) that allows the gas channel to communicate with the outside of the bag being formed at the upper end of the gas channel. After the bag has been filled with its filling material, a pressurized inert gas is blown from the gas inlet into the gas channel and then through the gas channel into the bag, thus replacing the air inside the bag with the inert gas. After this gas replacement, the gas inlet is sealed, and the bag mouth is also sealed.

## Description

### BADKGROUND OF THE INVENTION

### I. Field of the Invention

The present invention relates to a bag and a method and apparatus that includes a gas replacement step, in which the air inside the bag filled with filling material is replaced with an inert gas

### 2. Description of the Related Art

[Patent Reference 1] Japanese Patent Application Laid-Open (Kokai) No. 54-58592
[Patent Reference 2] Japanese Patent Application Publication (Kokoku) No. 58-52890
[Patent Reference 3] Japanese Patent Application Laid-Open (Kokai) No. 2013-233946

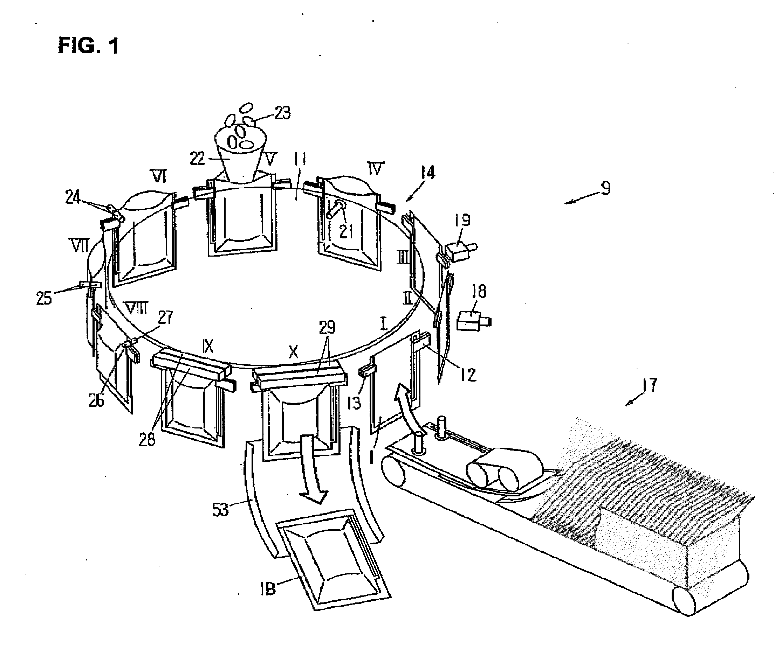

Figures 1 to 8 of Patent Reference 1 describes that the bag mouth of a bag sealed along the bottom edge and both side edges is opened, a gas nozzle (inert gas supply pipe) and a hopper (material filling pipe) are inserted into the bag, inert gas is blown through the gas nozzle into the bag, then the bag is filled with filling material through the hopper, during which time the blowing of the inert gas is continued to replace the air inside the bag with the inert gas, and then after which the gas nozzle and the hopper are pulled out of the bag at the same time, the bag mouth is next pulled taut and closed, and after which the bag mouth is clamped between a pair of hot plates, so that the bag mouth is sealed.

In Figures 9 to 17 of this Patent Reference 1, it is shown that after filling a bag with the filling material, the hopper is pulled out of the bag, the bag mouth is pulled taut and closed, and after an inert gas is blown into the bag for a while, the gas nozzle is pulled out of the bag, and then the bag mouth is clamped between a pair of hot plates, so that the bag mouth is sealed.

With the method described in Patent Reference 1, the inert gas starts to be blown in before adding the filling material, the bag is filled with the filling material after the air in the bag has been replaced with the inert gas, and the inert gas is allowed to continue to be blown in to replace the air present in gaps in the filling material with the inert gas. An effective gas replacement thus can be performed.

Although in Patent Reference 1 the gas nozzle is inserted into the bag before the bag is filled with the filling material, a method in which a gas nozzle is inserted into a bag after adding the filling material and the blowing outlet is positioned in the middle of the filling material for gas replacement is also commonly performed (see Patent Reference 3).

In Patent Reference 2, after adding the filling material, the bag mouth is pulled taut while leaving the gas nozzle inside the bag, then a pair of clamping plates are applied to the bag mouth to close it, after which the gas nozzle is pulled out of the bag, and the bag mouth is clamped and sealed with a pair of hot plates.

In Patent Reference 3, a cylindrical protective member is provided around the gas nozzle, so that the inner face of the bag mouth comes into contact with the outer peripheral face of the protective member when the bag mouth is pulled taut, and the gas nozzle is raised and accommodated in the interior of this protective member at the end of the gas replacement, and then the gas nozzle is raised together with the protective member and separated from the bag.

When, as described in Patent Reference 1, the bag mouth is pulled taut to the left and right direction while the inert gas continues to be blown in, and the gas nozzle is thereafter pulled out of the bag, it is possible to prevent air flown into the bag at the end of the gas replacement, and more effective gas replacement is thus performed. Also, when, as described in Patent Reference 2, the bag mouth is closed by applying a pair of clamping plates, and then the gas nozzle is pulled out of the bag, it is possible to prevent the inflow of air into the bag more reliably.

However, in the gas replacement methods described in Patent References 1 and 2, since the blowing outlet at the lower end of the gas nozzle is positioned within the filling material filled in the bag, the filling material adheres to the outer peripheral face near the blowing outlet of the gas nozzle. On the other hand, when the gas nozzle is pulled out of the bag, since the bag mouth is closed, the gas nozzle is pulled out of the bag while its outer peripheral face rubs against the inner face of the bag mouth. As a result, when the gas nozzle is pulled out through the bag mouth, the filling material that has adhered to the outer peripheral face of the gas nozzle sticks to the inner face of the mouth, which is the place that is to be sealed, so that poor sealing known as pinch sealing occurs when the bag mouth is sealed in a later step.

In the gas replacement method described in Patent Reference 3, when the gas nozzle is pulled out of the bag, the gas nozzle is accommodated inside the protective member and does not come into direct contact with the inner face of the bag mouth. Accordingly, filling material that has adhered to the outer peripheral face of the gas nozzle is prevented from sticking to the mouth inner face, which is the place to be sealed. However, in this method of Patent Reference 3, since the gas nozzle is inserted into the bag after the filing of the bag with the filling material, if the filling material is something that is soft (such as cooked beans), the filling material can be damaged by the gas nozzle.

### BRIEF SUMMARY OF THE INVENTION

The present invention is conceived in light of the above-described problems seen in the prior art pertaining to gas replacement, and it is an object of the present invention to provide a bag that has a gas channel and to provide a method and apparatus for packaging the bag, and in the present invention, the air (including any air present in gaps in the filling material) in a bag is efficiently replaced with an inert gas just as in the past, and adhesion of filling material to the bag mouth inner face and resulting pinch sealing are prevented, and further damages to the filling material are prevented as well.

The bag according to the present invention (a bag equipped with a gas channel) has sealed parts where the laminated films constituting the front and back faces of the bag are sealed at the bottom edge and the side edges, and a gas channel where the laminated films constituting the front and back faces are not fused is formed in the sealed parts, and also a part of the gas channel opens into the bag, and further a gas inlet that allows the gas channel to communicate with the outside of the bag is formed in one or both of the laminated films that constitute the front and back faces of the gas channel.

The above-described bag of the present invention can take the following embodiments, for example:
(1) The gas channel is formed in a side edge sealed part or is formed continuously with a side edge and bottom edge sealed parts, and the gas inlet is formed at the upper end of the gas channel.
(2) In the structure (1) above, the gas channel is formed in the side edge sealed part, and the lower part of the gas channel is opened into the bag.
(3) The bag is a finished bag in which the bag is filled with its filling material, the air inside the bag is replaced with an inert gas, and the bag mouth at the top edge and the gas inlet are sealed.
(4) In the bag (3) above, a sealed part that continues intermittently along the bag mouth is formed near the sealed mouth of the bag.

In the bag packaging method according to the present invention, the side edges of a bag are clamped by a pair of bag conveyance grippers, and the bag hangs down while being conveyed along a specific conveyance path, and such packaging steps as opening up of the bag mouth, filling of the bag with its filling material, replacing of the air inside the bag with an inert gas, sealing of the bag mouth, and others are successively carried out in the course of this conveyance,
wherein
the bag is the one that is equipped with a gas channel, in which sealed parts where the laminated films constituting the front and back faces of the bag are sealed at the bottom edge and the side edges of the bag are provided, a gas channel where the laminated films constituting the front and back faces are not fused is formed in the sealed parts, a part of the gas channel opens into the bag, and a gas inlet that allows the gas channel to communicate with the outside of the bag is formed in one or both of the laminated films constituting the front and back faces of the gas channel, and
after a filling step of filling this bag with its filling material, a gas replacement step is performed so that an inert gas is blown through the gas inlet into the gas channel and is blown through the gas channel into the bag to replace the air inside the bag with the inert gas, and then, after this gas replacement step, a gas inlet sealing step to seal the gas inlet and a bag mouth sealing step to seal the bag mouth are performed.

The above-described bag packaging method of the present invention can take the following embodiments, for example:
(1) In the gas replacement step, the blowing outlet of a nozzle connected to an inert gas supply source is placed against the gas inlet, and the inert gas is blown from the gas inlet into the gas channel.
(2) An ultrasonic sealing device including a horn and an anvil is employed. The horn and the anvil are disposed so that they are on either side of a bag that is equipped with a gas channel, an inert gas channel is formed in the horn and/or anvil so that one end thereof is connected to an inert gas supply source and another end thereof opens to the distal end of the horn and/or anvil, the horn and/or the anvil in which the inert gas channel is formed serves also as the nozzle, the other end of the inert gas channel is used as the blowing outlet, so that in the gas replacement step, an inert gas is blown into the inert gas channel by the horn and/or the anvil, and the horn and the anvil carry out the gas inlet sealing step.
(3) The bag mouth is pulled taut by increasing the spacing between the pair of bag conveyance grippers, either after completion of the gas replacement step or during the time between the start and completion of the gas replacement step.
(4) An intermittent sealed part formation step in which a sealed part is formed intermittently along the bag mouth is performed near the bag mouth between the filling step and the gas replacement step.

In the bag packaging apparatus according to the present invention, the side edges of a bag are clamped by a pair of bag conveyance grippers, and the bag hangs down while being conveyed along a specific conveyance path, and such packaging steps as opening up of the bag mouth, filling of the bag with its filling material, replacing of the air inside the bag with an inert gas, sealing of the bag mouth, and others are successively carried out in the course of this conveyance,
wherein
the bag is the one that is equipped with a gas channel, in which sealed parts where the laminated films constituting the front and back faces of the bag are sealed at the bottom edge and the side edges of the bag are provided, a gas channel where the laminated films constituting the front and back faces are not fused is formed in the sealed parts, a part of the gas channel opens into the bag, and a gas inlet that allows the gas channel to communicate with the outside of the bag is formed in one or both of the laminated films constituting the front and back faces of the gas channel, and
a bag mouth opening device, a material filling device, a gas replacement device, and a bag mouth sealing device are disposed along the conveyance path, in which,
the gas replacement device includes a nozzle that is connected to an inert gas supply source, blows an inert gas out from the blowing outlet provided at its distal end, and blows the inert gas from the gas inlet into the gas channel, and
the bag mouth sealing device includes a pair of sealing members that clamp and seal the bag mouth from both sides of the bag, and
a gas inlet sealing device that seals the gas inlet of the bag after gas replacement is further disposed along the conveyance path, the gas inlet sealing device including a pair of sealing members that clamp and seal the gas inlet from both sides of the bag.

The above-described bag packaging apparatus of the present invention can take the following embodiments, for example:
(1) The gas inlet is formed in both of the laminated films constituting the front and back faces of the bag, and the gas replacement device comprises a pair of nozzles that are disposed to face each other and connected to an inert gas supply source and blows the inert gas out of the blowing outlet which is provided at its distal end.
(2) The gas replacement device includes a nozzle, which is connected to an inert gas supply source and blows an inert gas out of the blowing outlet which is provided at its distal end, and a receiving member, which is disposed opposite to face the nozzle and supports the back face side of the bag.
(3) The bag mouth sealing device serves also as the gas inlet sealing device, and the pair of sealing members of the bag mouth sealing device clamp and seal the bag mouth and the gas inlet from both sides of the bag. In this structure, an independent gas inlet sealing device is not required.
(4) An ultrasonic sealing device is used as the gas inlet sealing device and this ultrasonic sealing device serves also as a gas replacement device. In the ultrasonic sealing device, an inert gas channel is formed in a horn and/or anvil in which one end thereof is connected to an inert gas supply source and another end thereof opens to the distal end of the horn and/or anvil, the other end of the inert gas channel is used as the blowing outlet, an inert gas is blown into the inert gas channel by the horn and/or the anvil in which the inert gas channel is formed, and the horn and the anvil seal the gas inlet.
(5) An intermittent sealed part formation device, which makes a sealed part formed intermittently along the bag mouth near the bag mouth, is disposed next to the material filling device in the conveyance path.

As seen from the above, according to the present invention, the air (including any air present in the gaps in the filling material) in a bag can be efficiently replaced with an inert gas, and at the same time, adhesion of the filling material to the bag mouth inner face and resulting pinch sealing can be prevented, and further damages to the filling material can also be prevented.

### BRIEF DESCRIPTION OF THE SEVERAL VIEWS OF THE DRAWINGS

FIG. 1 is a perspective view of a bag packaging apparatus according to the present invention;
FIG. 2 is a front view of the bag (empty bag) according to the present invention with the hatchings indicating the sealed parts;
FIG. 3 is a front view of an ultrasonic sealing device provided in the packaging apparatus shown in FIG. 1;
FIGS. 4A through 4C are front views of the gas replacement step performed by the bag packaging apparatus of FIG. 1, being illustrated in time sequence;
FIGS. 5A through 5C are side views respectively corresponding to FIGS. 4A through 4C;
FIGS. 6A through 6C are front views of the gas replacement step performed by the packaging apparatus of FIG. 1, being illustrated in time sequence;
FIGS. 7A through 7C are side views respectively corresponding to FIGS. 6A through 6C;
FIG. 8 is a front view of a bag (finished bag) according to the present invention with the hatchings indicating the sealed parts;
FIGS. 9A through 9D are front views of bags (empty bags) each having a gas channel in different modes from that of the bag shown in FIG. 2 with the hatchings indicating the sealed parts; and
FIGS. 10A through 10C are front views of a bag and packaging method according to another manner of the present invention, being illustrated in time sequence.

### DETAILED DESCRIPTION OF THE INVENTION

A bag equipped with a gas channel and a packaging method and apparatus therefor according to the present invention will be described below in detail with reference to FIGS. 1 to 10C.

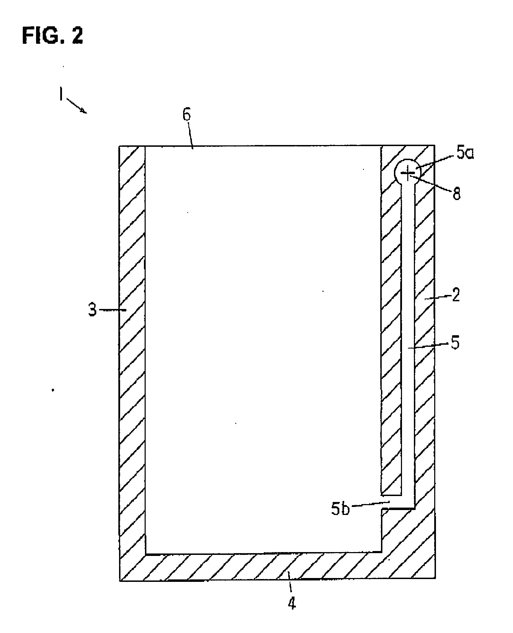

First, FIG. 2 illustrates a gas channel-equipped bag 1 (hereinafter referred to simply as a bag 1). The bag 1 is comprised of laminated films constituting the front and back faces of the bag, and these films have sealed parts 2, 3 and 4 on both side edges and the bottom edge, respectively. The side edge sealed part 2 is formed wider than the other side edge sealed part 3. Part of the side edge sealed part 2 is an unsealed part where the films constituting the front and back faces are not fused together, and this unsealed part makes a gas channel 5. The gas channel 5 is located at the place where the films constituting the front and back faces of the bag 1 are not pressed and sealed in the heat-sealing, and it extends downward in a narrow shape from near the mouth 6 (the upper end of the sealed part 2) of the bag 1.

A gas inlet 5a that allows the gas channel 5 to communicate with the outside of the bag is formed in part (the upper end in this example) of the gas channel 5. The gas inlet 5a is approximately circular, and its diameter is larger than the width of the other portions of the gas channel 5. The gas inlet 5a is formed with a cross-shaped cutout 8 at the center of the films constituting the front and back faces. Also, part (the lower end in this example) of the gas channel 5 opens into the interior of the bag 1. This portion opening into the interior of the bag 1 is called a communicating portion 5b of the gas channel 5. When an inert gas is blown from the gas inlet 5a into the gas channel 5, the inert gas flows down through the gas channel 5 and is blown from the communicating portion 5b into the interior of the bag 1. The "inert gas" referred to in the present invention encompasses argon gas, helium gas, and other such noble gas elements as well as nitrogen gas and other such elements having low chemical reactivity.

FIG. 1 shows a packaging apparatus 9 according to the present invention. The packaging apparatus 9 is a rotary packaging apparatus, and it is similar to the rotary packaging apparatus shown in, for example, Figure 2 of Japanese Patent Application Laid-Open (Kokai) No. 2014-139090. The packaging apparatus 9 comprises a bag conveyance device 14 in which a plurality of pairs (ten pairs) of left and right bag conveyance grippers 12 and 13 are installed at an equidistant spacing around a table 11 that rotates intermittently and counter-clockwise by a specific angle each time. In this bag conveyance device 14, the bag conveyance grippers 12 and 13 grasp both side edges (the sealed parts 2 and 3) of the bag 1 supplied thereto so that the bag hangs down and intermittently convey the bags 1 around a circular conveyance path formed by the table. The spacing between the gripers 12 and 13 are increased or decreased during the course of the conveyance at a specific timing. After a bag 1 is supplied to the grippers 12 and 13, the bag 1 that is grasped by the grippers 12 and 13 is successively subjected to various packaging steps at various positions (the stop positions I to X) at which the grippers 12 and 13 stop, including the step of opening up of the bag mouth, filling the bag with the filling material, and sealing the mouth of the bag. A gas replacement step and a gas inlet sealing step are further performed.

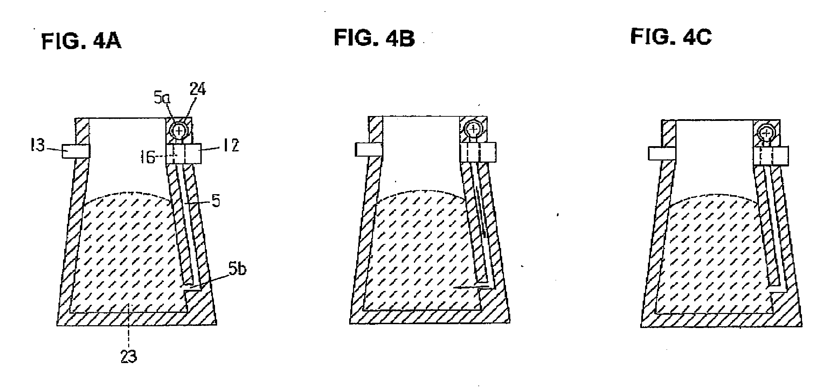

Each of the grippers 12 and 13 is composed of a pair of grip pieces. As shown in FIG. 4A, the gripper 12 grasps the sealed part 2 of the bag so as to cross over the gas channel 5 horizontally. A shallow groove 16 that runs in the up and down direction is formed on the inside (the gripping side) of one or both of the grip pieces of the gripper 12; and when the gripper 12 grasps the sealed part 2, this groove(s) 16 is superposed over the gas channel 5, so that the gas channel 5 is not flattened (not blocked off) by the gripper 12.

In the packaging apparatus 9, a conveyor magazine type bag supplier 17 is disposed at the stop position I of the conveyance path. Furthermore, a printing device (only its head 18 is shown) is disposed at the stop position II, a print inspection device (only its head 19 is shown) is disposed at the stop position III, an opening device that includes a pair of suction cups (only one suction cup 21 is shown) is disposed at the stop position IV, a material filling device (only its hopper 22 is shown) is disposed at the stop position V, a first gas replacement device (only a pair of nozzles 24 thereof is shown) is disposed at the stop position VI, a second gas replacement device (only a pair of nozzles 25 thereof is shown) is disposed at the stop position VII, a third gas replacement device (only a horn 26 and an anvil 27 thereof are shown) is disposed at the stop position VIII, a bag mouth sealing device (only a pair of hot plates 28 thereof is shown) is disposed at the stop position IX, and a cooling device (only a pair of cooling plates 29 thereof is shown) is disposed at the stop position X.

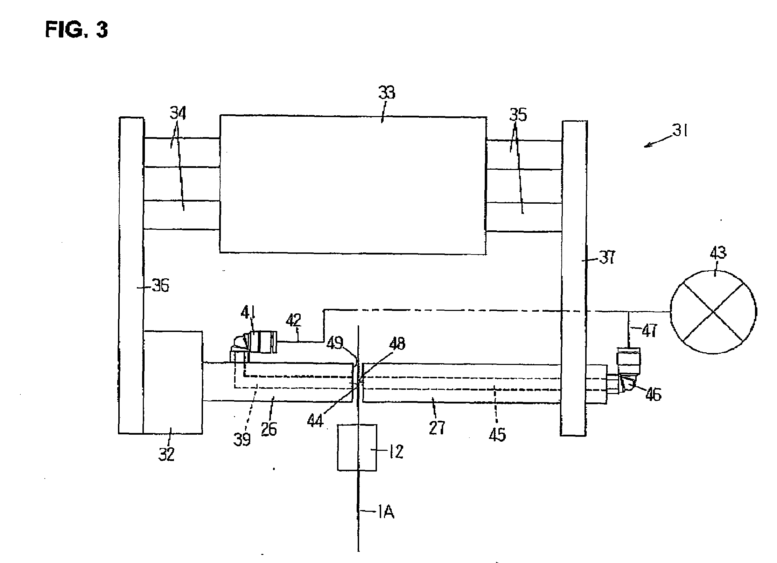

The gas supply means shown in Figures 16 and 17 of Japanese Patent Application Laid-Open (Kokai) No. 2014-139090 (only a pair of nozzles 43 and 44 thereof disposed to face each other are shown therein) can be used as the first and second gas replacement devices disposed at the stop positions VI and VII of the packaging apparatus 9. Alternatively, the gas supply means shown in Figures 3 and 4 of Japanese Patent Application Laid-Open (Kokai) No. 2014-139090 (only the nozzle 28 and the receiving member 29, which are disposed to face each other, are shown therein) can also be used as needed.

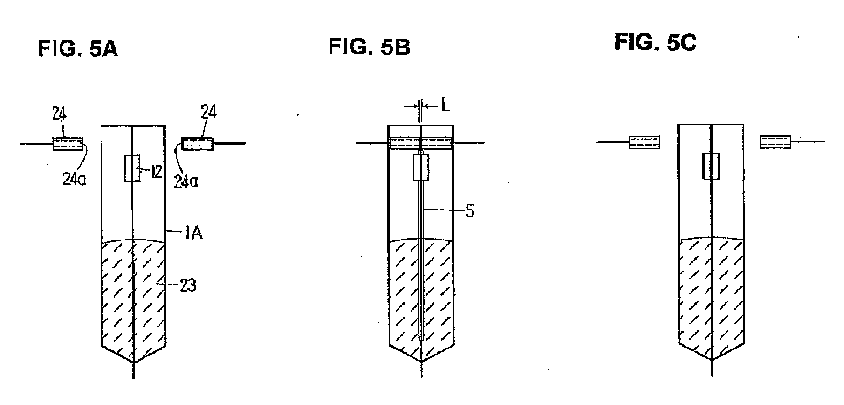

The pair of nozzles 24 of the first gas replacement devices are connected to an inert gas supply source (not shown). These nozzles 24 are disposed to face each other with the conveyance path of the bag 1 in between. The nozzles 24 are moved forward (so as to get closer to the conveyance path) or backward (so as to get away from the conveyance path) with respect to the bag 1 stopped at that stop position VI, and their distal end blowing outlets 24a (see FIG. 5A) are provided so as to be placed against the gas inlet 5a of the bag when they are in the forward position. A specific narrow spacing L (somewhat wider than the thickness of the bag 1) is provided between the blowing outlets 24a at the forward position of the nozzle 24(see FIG. 5B), and this spacing L is maintained when the inert gas is being blown in. This spacing L is secured so the blowing in of the gas (inert gas) from the gas inlet 5a into the gas channel 5 of the bag is not hindered as described in Japanese Patent Application Laid-Open (Kokai) No. 2014-139090. When the nozzles 24 are both moved back to their retracted position (see FIG. 5C), interference thereof with the bag 1 being conveyed along the conveyance path is avoided. The forward and backward direction of the nozzles 24 is, as can be seen from the above, perpendicular to the bag 1.

The pair of nozzles 25 of the second gas replacement device have exactly the same structure and make the same movement as the pair of nozzles 24 of the first gas replacement device do.

FIG. 3 shows an ultrasonic sealing device 31, which is a main component of the third gas replacement device disposed at the stop position VIII. This ultrasonic sealing device 31 comprises the horn 26 and anvil 27, an ultrasonic vibration generator 32 that vibrates the horn 26, and an air cylinder 33 that moves the horn 26 and the anvil 27 back and forth. Attachment members 36 and 37 are fixed to the distal ends of piston rods 34 and 35 of the air cylinder 33, respectively. The ultrasonic vibration generator 32 is fixed to the attachment member 36, and the anvil 27 is fixed to the attachment member 37. The ultrasonic sealing device 31 thus structured further includes a cooling means (not shown), and the ultrasonic vibration generator 32, the horn 26, and the anvil 27 are cooled by this cooling means.

A hole (inert gas channel) 39 is formed in the interior of the horn 26, and one end of this inert gas channel 39 opens to a side face of the horn 26 and is connected to an inert gas supply source 43 via a connector 41, a pipe 42, and a switch valve or the like (not shown), while the other end of the inner gas channel 39 opens to the distal (forward) end of the horn 26 and thus makes an inert gas blowing outlet 44. The anvil 27 also has a hole (inert gas channel) 45 formed in its interior. One end of this inert gas channel 45 opens to the rear end of the anvil 27 and is connected to the inert gas supply source 43 via a connector 46 and a pipe 47, and the other end of the gas channel 45 opens to the distal (forward) end of the anvil 27 and makes an inert gas blowing outlet 48.

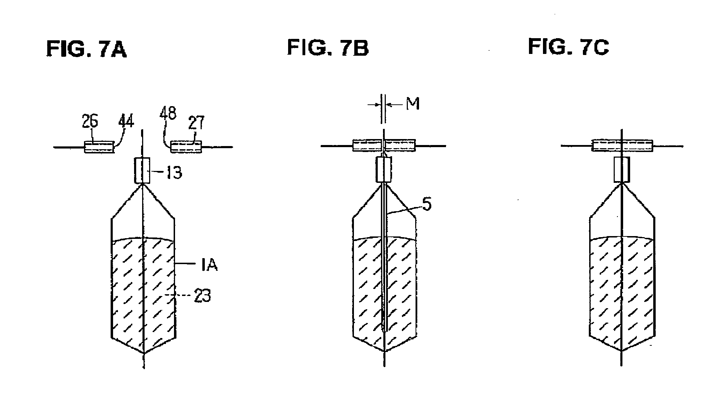

The horn 26 and the anvil 27 of the ultrasonic sealing device 31 are disposed to face each other with the conveyance path of the bag 1 in between. They are moved forward (to get closer to the conveyance path) or backward (to get away from the conveyance path) by the air cylinder 33 with respect to the bag 1 stopped at that stop position VIII, symmetrically to each other. The air cylinder 33 is a three-position type, so that the horn 26 and the anvil 27 are stopped at their retracted position, which is the farthest away from the conveyance path (see FIG.7A), at their forward position where their distal ends clamp (or hold) the bag 1 (see FIG. 7C), and at a blowing position which is between the retracted position and the forward position (see FIG. 7B). The forward and backward direction of the horn 26 and anvil 27 is perpendicular to the bag 1. It is provided so that when the horn 26 and the anvil 27 have been moved to the retracted position, interference with the bag 1 being conveyed along the conveyance path can be avoided and that when the horn 26 and the anvil 27 have been moved to the blowing position, a specific narrow spacing M (somewhat wider than the thickness of the bag 1) is left between the blowing outlets 44 and 48, and this spacing is maintained for a specific length of time.

A packaging method that uses the packaging apparatus 9 shown in FIG. 1 will now be described below with reference to FIGS. 1 to 8.
(1) At the stop position I (bag feed step position), a bag I is supplied from the conveyor magazine-type bag supplier 17 to the pair of grippers 12 and 13 that have been stopped there, and the grippers 12 and 13 grasp the specific locations of the sealed parts 2 and 3 from the front and back faces of the bag 1. The gripper I2 at this point grasps a location that is somewhat below the gas inlet 5a of the bag (see FIG. 4A). In this case, the gas channel 5 is not flattened (or not blocked off) because the groove 16 (see FIG. 4A), which is formed on the inside of the grip pieces of one or both of grippers and runs in the up and down direction, cover(s) the gas channel 5 from above.
(2) At the stop position II (printing step position), the bag 1 stopped at this position is printed on its surface by the printing device (see the head 18).
(3) At the stop position III (print inspection step position), the bag 1 stopped at this position is subjected to print inspection by the print inspection device (see the head 19).
(4) At the stop position IV (opening step position), the mouth 6 of the bag 1 stopped at this position is opened up by the opening device. A pair of suction cups 21 of this opening device (only one suction cup 21 is shown in FIG. 1) are provided so as to move forward and backward with respect to the bag 1. When they are moved forward, they suction-hold the films on both sides of the bag 1 and then moved backward while still holding the films, thus opening up the mouth 6 of the bag. At the same time, the grippers 12 and 13 narrow the gap between them (see FIG. 4A). Next, an opening head (not shown; see the opening head 26 shown in Figure 2 of Japanese Patent Application Laid-Open (Kokai) No. 2014-139090) of the opening device descends, its lower end goes through the mouth 6 into the bag 1, and air is blown into the bag 1 to inflate the bag.
(5) At the stop position V (material filling step position), the bag 1 stopped at this position is filled with filling material 23 by the material filling device. The hopper 22 of this filling device is raised above the bag 1 then descended and is inserted through the mouth 6 into the bag 1, so that the bag 1 is filled with the filling material 23.
(6) The gas replacement step, which follows the filling step, is performed three times in a first gas replacement step, a second gas replacement step, and a third gas replacement step.

The first gas replacement device having the pair of nozzles 24 is disposed at the stop position VI (first gas replacement step position). As shown in FIGS. 4A and 5A, when the filled bag 1 (hereinafter referred to as the filled bag 1A) is stopped at the stop position VI, the nozzles 24 are in their retracted position.

The nozzles 24 are then moved forward and reach the forward position, the blowing outlets 24a of the nozzles approach the gas inlet 5a from both sides of the filled bag 1A, and inert gas is blown out as shown in FIGS. 4B and 5B. As a result, pressurized inert gas is blown from the gas inlet 5a into the gas channel 5, and this inert gas flows down through the gas channel 5 as indicated by the arrow in FIG. 4B, and is blown from the communicating portion 5b into the interior of the filled bag 1A, and then it rises up through the gaps in the filling material 23 in the filled bag 1A. Consequently, the air in the filled bag 1A (including the air present in the gaps in the filling material 23) is efficiently replaced with the inert gas. In FIG. 5B, the gas channel 5 is shown in a manner that it has been inflated by the pressure of the inert gas.

After a specific amount of time has passed, as shown in FIGS. 4C and 5C, the blowing of the inert gas out of the blowing outlets 24a of the nozzles 24 is halted, and the nozzles 24 are moved back to their retracted positions.
(7) The second gas replacement device having the pair of nozzles 25 is disposed at the stop position VII (second gas replacement step position). At this stop position VII, the filled bag 1A stopped there is again subjected to the same gas replacement step as that performed at the stop position VI.

In these gas replacement steps, the timing of the starting and stopping of the blowing of the inert gas out of the nozzles 24 and 25 is set as desired.
(8) The ultrasonic sealing device 31 shown in FIG. 3 is disposed near the conveyance path of the bag 1A at the stop position VIII (third gas replacement step and gas inlet sealing step position), and the filled bag 1A stopped at this stop position is subjected to the third gas replacement step and also to the sealing step for the gas inlet 5a.

At the stop position VIII, the grippers 12 and 13 are spread apart from each other while the filled bag 1A gripped by the grippers 12 and 13 is being conveyed from the stop position VII to the stop position VIII. Consequently, the places on the filled bag 1A grasped by the grippers 12 and 13 is pulled taut to the left and right, which applies tension to and closes the upper part of the filled bag 1A including the mouth 6.

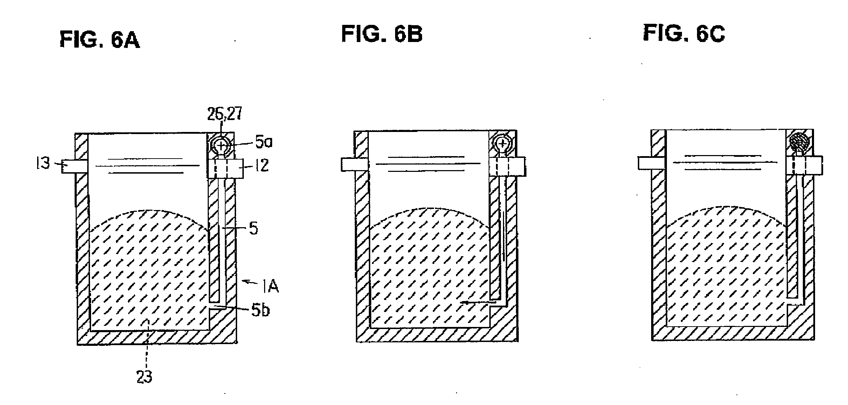

When the filled bag 1A is stopped at the stop position VIII, the horn 26 and anvil 27 are in their retracted positions as shown in FIGS. 6A and 7A.

The ultrasonic sealing device 31 is then operated to move the horn 26 and the anvil 27 forward until they reach positions just short of their forward positions (the above-described blowing position), the blowing outlets 44 and 48 of the horn and the anvil, respectively are moved close to the gas inlet 5a from both sides of the filled bag 1A, and inert gas is blown out therefrom as shown in FIGS. 6B and 7B. As a result, pressurized inert gas is blown from the gas inlet 5a into the gas channel 5, and this inert gas flows down through the gas channel 5 as indicated by the arrow in FIG. 6B, and is blown from the communicating portion 5b into the interior of the filled bag 1A, and then rises up through the gaps in the filling material 23 inside the filled bag 1A, so that it flows out from the mouth 6 to the outside of the bag. Since the mouth 6 is closed, outside air is prevented from getting into the bag through the mouth 6, so the air inside the filled bag 1A (including the air present in the gaps in the filling material 23) is replaced even more efficiently with the inert gas. In FIG. 7B, the gas channel 5 is illustrated so that it that has been inflated by the pressure of the inert gas.

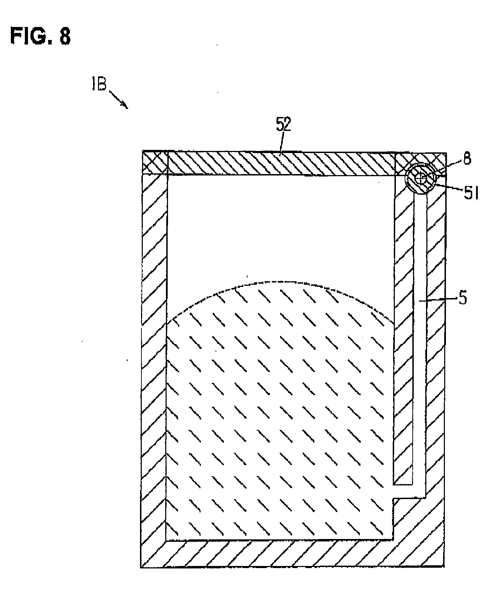

After the horn 26 and anvil 27 are stopped at the blowing position, the blowing of the inert gas out of the blowing outlets 44 and 48 is halted at a specific timing. Next, the air cylinder 33 is operated to move the horn 26 and the anvil 27 forward, and ultrasonic vibrations are generated by the ultrasonic vibration generator 32, and its vibration energy is supplied to the horn 26. Consequently, as shown in FIGS. 6C and 7C, the distal ends of the horn 26 and anvil 27 clamp the gas inlet 5a from both sides of the filled bag 1A, the films constituting the front and back faces of the gas inlet 5a (and particularly around the cutout 8) are ultrasonically sealed thereby, and the gas channel 5 (the gas inlet 5a) is thus closed. As shown in FIG. 8, a ring-shaped ultrasonically sealed part 51 (the ring-shaped sealed part is shown by hatched lines) is formed to coincide with the shape of the part clamped by the horn 26 and anvil 27 (the shape of the distal end face 49 of the horn 26). Most or all of the cutout 8 itself is not sealed by this ultrasonic sealing; however, since the films constituting the front and back faces of the gas inlet 5a around the cutout 8 are sealed, the gas channel 5 is closed assuredly.

As seen from the above, the ultrasonic sealing device 31 serves as both a gas replacement device and a gas inlet sealing device. Accordingly, fewer steps are required, and the apparatus takes up less installation space.

Furthermore, since the mouth 6 of the filled bag 1 A is being pulled taut by the pair of grippers 12 and 13, the position of the gas inlet 5a is fixed, and thus there will tend to be fewer misalignments between the positions of the horn 26 and anvil 27 and the position of the gas inlet 5a upon arrival at the blowing position and upon further forward movement to clamp the gas inlet 5a.

When the ultrasonic sealing is finished (or when the generation of ultrasonic waves is finished), no more frictional heat is generated by the ultrasonic vibration, and the ultrasonically sealed part 51 clamped by the distal ends of the horn 26 and anvil 27 is immediately cooled by the horn 26 and anvil 27. After the ultrasonic sealing is finished, the air cylinder 33 is operated in reverse with suitable timing, and as a result the horn 26 and the anvil 27 are moved back to the above-described retracted (or backward) position (see FIG. 3A).
(9) At the next stop position IX (sealing step position), the pair of hot plates 28 clamp the mouth 6 of the bag 1A and heat-seal it The sealed part formed by this heat-sealing is indicated by reference numeral 52 in FIG. 8.
(10) At the stop position X (sealed part cooling and discharge step position), the pair of cooling plates 29 clamp and cool the sealed part 52. During this cooling, the grippers 12 and 13 are opened up, then the cooling plates 29 are opened up as well, and thus the filled bag 1A (hereinafter referred to as the finished bag 1B) drops and is discharged to the outside of the apparatus by a chute 53.

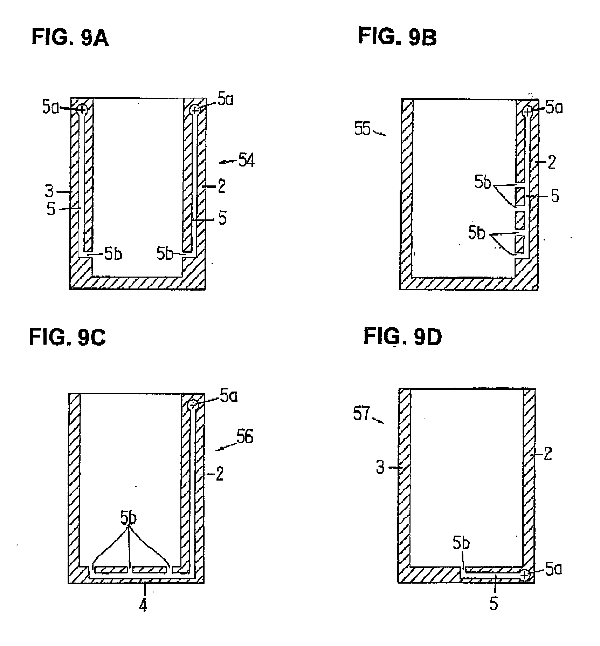

Another embodiment of the gas channel 5 will now be described with reference to FIGS. 9A through 9D. Portions that are substantially the same as those in the bag 1 shown in FIG. 2 will be numbered with the same reference numbers.

The bag 54 shown in FIG. 9A has gas channels 5 formed in both the sealed parts 2 and 3. The gas channels 5 of the bag 54 both have respectively gas inlets 5 a at the upper ends and have communicating portions 5b at the lower ends. In this bag 54, since the communicating portions 5b that open to the interior of the bag 54 are formed on both lateral sides of the bag, inert gas can be more thoroughly blown into the bag 54 (including the gaps in the filling material), and more efficient gas replacement is achieved.

The bag 55 shown in FIG. 9B has gas channel 5 formed in the sealed part 2. The gas channel 5 has the gas inlet 5a formed in the upper end of the gas channel 5 and has communicating portions 5b formed at a plurality of places in the lower location. In this bag 55, since the communicating portions 5b that open into the interior of the bag 55 are formed at a plurality of places in the up and down direction, inert gas can be blown more uniformly into the filling material that fills the bag 55, and as a result more efficient gas replacement is achieved.

The bag 56 shown in FIG. 9C has gas channel 5 that is formed continuously from the sealed part 2 on the side edge to the sealed part 4 on the bottom edge. This gas channel 5 has the gas inlet 5a formed at the upper end of the gas channel 5 and has communicating portions 5b formed at a plurality of places in the sealed part 4. In this bag 56, since the communicating portions 5b that open into the interior of the bag 56 are formed at a plurality of places in the width direction of the sealed part 4, inert gas can be blown more uniformly into the bag 55 (including the gaps in the filling material), and as a result more efficient gas replacement is achieved.

The bag 57 shown in FIG. 9D has gas channel 5 formed from one end of the sealed part 4 on the bottom edge to the center in the width direction of the bag. This gas channel 5 has the gas inlet 5a formed at one end of the gas channel 5 and has the communicating portion 5b formed at the other end (so as to be located at the center in the width direction of the bag). Since the gas channel 5 is not formed in the sealed parts 2 and 3 on the side edges, there is no need to increase the width of the sealed parts 2 and 3, and the gas channel 5 can be made shorter, which reduces energy loss in the inert gas flowing through the gas channel 5. When the gas inlet 5a is thus formed in the sealed part in the bottom edge, a change in the length of the bag 57 will cause the location of the gas inlet 5a to be changed in the up and down direction. Accordingly, if the length of the bag changes (or when bags of different length are processed), it will be necessary to change the height of the nozzles 24 and 25 and the height of the horn 26 and anvil 27.

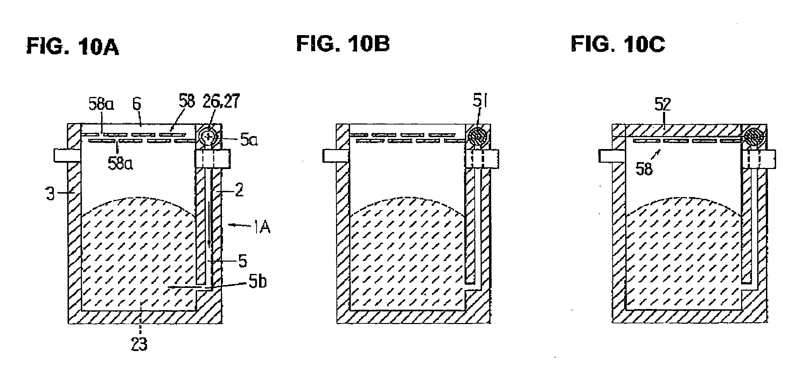

Furthermore, in the packaging method according to the present invention, a sealed part that continues intermittently (intermittent sealed part) can be formed near and along the bag mouth as needed after the bag is tilled with the filling material. In FIG. 10, a two-level (upper and lower) intermittent sealed part 58 is formed in the filled bag 1A. The intermittent sealed part 58 continues intermittently in the width direction of the bag, including a plurality of unsealed parts 58a. In this example, the unsealed parts 58a are formed in a relatively narrow width. The intermittent sealed part itself is known (see Japanese Patent Application Laid-Open (Kokai) No. 11-29153, for example).

The intermittent sealed part 58 can be formed, similar to the sealed part 52, by an intermittent sealed part formation device that includes a pair of hot plates. The timing that the intermittent sealed part 58 is formed is preferably after the end of the material filling step and before the start of the gas replacement step. If the gas replacement step is conducted a plurality of times, the intermittent sealed part 58 is preferably formed before the first gas replacement step, although it can also be formed between the plurality of gas replacement steps.

Part of the gas replacement step for a bag in which the intermittent sealed part 58 is formed (and in particular a gas replacement step that uses the ultrasonic sealing device 31) will now be described with reference to FIGS. 10A through 10C.
(1) FIG. 10A corresponds to FIG. 6B, time sequence-wise. A two-level intermittent sealed part 58 is formed near the mouth 6 of the filled bag 1A in which the intermittent sealed part 58 has been formed. The intermittent sealed part 58 is what is known as a "maze seal", with the upper- and lower-level unsealed parts 58a formed in a staggered manner (offset from one another).

The horn 26 and anvil 27 cause inert gas to be blown out from their blowing outlets 44 and 48 (see FIG. 3), and the pressurized inert gas is blown from the gas inlet 5a into the gas channel 5, and then this inert gas flows down through the gas channel 5 as indicated by the arrow and is blown from the communicating portion 5b into the interior of the filled bag 1A. The inert gas that has been blown into the interior of the filled bag 1A rises up through the gaps in the filling material 23 in the filled bag 1A, and as this occurs, the air in the filled bag 1A (including any air present in the gaps in the filling material) flows through the narrow passages in the intermittent sealed part 58 and goes out of the bag through the mouth 6.

If the filling material 23 is something that is extremely lightweight, with a great number of thin shavings mixed in, such as *katsuobushi* (dried bonito flake) or *furikake* (seasoned powdery flavoring for sprinkling on rice), these lightweight small pieces will tend to float up and be scattered outside the bag when the inert gas is blown into the filled bag 1A. In the case of filled bag 1A that has the intermittent sealed part 58 formed in it, even if the filling material 23 should float up, it will be blocked by the intermittent sealed part 58; accordingly, the advantage is that the filling material 23 will tend not to be scattered out of the bag. Therefore, compared to the filled bag 1A shown in FIG. 6A that has no intermittent sealed part 58 formed, the gas replacement can be finished in a shorter time by blowing in the inert gas under a higher pressure.
(2) FIG. 10B corresponds to FIG. 6C, time sequence-wise. Ultrasonic vibration energy is supplied from the ultrasonic vibration generator 32 (see FIG. 3) to the horn 26, the horn 26 and the anvil 27 are moved forward to clamp the gas inlet 5a from both sides of the filled bag 1 A, the films constituting the front and back faces of the gas inlet 5a (and particularly around the cutout 8) of the bag arc ultrasonically sealed, and the gas channel 5 is closed.
(3) FIG. 10C shows a situation that the hot plates 28 clamp and heat-seal the mouth 6 of the bag in the bag mouth sealing step. In this example, the hot plates 28 are placed over part of the intermittent sealed part 58 to seal it, and the remainder of the intermittent sealed part 58 (one level) is located under the sealed part 52.

Various embodiments of the bag equipped with a gas channel and the packaging method and apparatus according to the present invention are described above with reference to FIGS. 1 to 10C, and in the present invention the embodiments below are also possible:
(1) In the above-described examples, the bags 1 gripped by grippers are intermittently conveyed along a circular conveyance path, and specific packaging steps are carried out on each one of the bags 1 at the various stop positions. The nozzles 24 and 25 and the ultrasonic sealing device 31, however, can be moved synchronously with the conveyance of bags and returned to their initial positions after reaching the movement end positions, so that the specific packaging steps are carried out while each one of the bags 1 is being conveyed. In addition, the conveyance of the bag 1 can be done continuously, and the conveyance path can be, for instance, linear or in the shape of a racetrack rather than circular.
(2) In the above examples, the gas replacement step is performed three times intermittently. However, the number of times of gas replacement can be set as desired, and it can be just once.
(3) In the above examples, the spacing between the grippers 12 and 13 is increased before the third gas replacement step, and the mouth of the bag 1 is pulled taut. However, this operation can be performed whenever appropriate after the filling step, either after completion of the gas replacement step or during the time between the start and completion of the gas replacement step. If the gas replacement step is carried out a plurality of times, this can be performed whenever appropriate, either after completion of the last gas replacement step or during the time between the start of the first gas replacement step and completion of the last gas replacement step. From the standpoint of increasing the gas replacement efficiency, however, it is preferably performed after the filling step and before the start of the gas replacement step (if the gas replacement step involves a plurality of times, it should be started no later than before the start of the last gas replacement step).
(4) In the above examples, the sealing function of the ultrasonic sealing device 31 is utilized, and the sealing step of the gas inlet 5a after the third gas replacement step is performed using this same ultrasonic sealing device 31. When the gas replacement device, however, does not have the function of performing the sealing step (such as when the gas is replaced by the pair of nozzles 24), then a sealing device (such as one having a pair of hot plates) must be installed to seal the gas inlet 5a separately. Alternatively, the gas inlet 5a of the bag can be simultaneously sealed by a sealing device that seals the bag mouth (the bag mouth sealing device serving also as the gas inlet sealing device).
(5) In the above examples, the bag 1 has the cutout 8 formed in the films constituting the front and back faces of the gas inlet 5a of the bag; however, the cutout 8 of the gas inlet 5a can be formed in just one of the films constituting either the front or back face. In this case, no inert gas is blown out of the nozzle disposed on the side where no cutout 8 is formed, or a receiving member that has no blowing outlet is installed instead of this nozzle. When an ultrasonic sealing device is used for this purpose, no inert gas is blown out of the member that is disposed on the side where no cutout 8 is formed, and an inert gas channel does not need to be formed in that member. Also, a hole (see Japanese Patent Application Laid-Open (Kokai) No. 2014-139090) can be formed the inert gas inlet instead of the cutout 8.

### Description of Reference Numerals

- 1: Bag equipped with gas channel
- 1A: Filled bag
- 1B: Finished bag
- 5: Gas channel
- 5a: Gas inlet
- 5b: Communicating portion
- 8: Cutout
- 24, 25: Nozzle
- 26: Horn
- 27: Anvil
- 31: Ultrasonic sealing device
- 51: Ultrasonically sealed part
- 58: Intermittent sealed part

## Claims

1. A bag equipped with a gas channel, comprising:
a sealed part provided in a bottom edge and both side edges of a bag, the sealed part being where laminated films that constitute front and back faces of the bag are sealed,
a gas channel where the laminated films that constitute the front and back faces of the bag are not fused, the gas channel being formed in the sealed part, and a part of the gas channel opening into the bag, and
a gas inlet formed in one or both of laminated films constituting front and back faces of the gas channel, the gas inlet allowing the gas channel to communicate with outside of the bag.

2. The bag equipped with a gas channel according to Claim 1, wherein
the gas channel is formed in the sealed part of a side edge or is formed continuously in the sealed part of the side edge and bottom edge, and
the gas inlet is formed at an upper end of the gas channel.

3. The bag equipped with a gas channel according to Claim 2, wherein
the gas channel is formed in the sealed part of the side edge, and
a lower part of the gas channel opens into the bag.

4. The bag equipped with a gas channel according to any of Claims 1 to 3, wherein
the bag is a finished bag in which a bag is filled with a filling material,
air inside of the bag is replaced with an inert gas, and
a bag mouth at a top edge of the bag and the gas inlet are sealed.

5. The bag equipped with a gas channel according to Claim 4, wherein
a sealed part that continues intermittently along the bag mouth is formed near the sealed mouth of the bag.

6. A bag packaging method, in which a pair of bag conveyance grippers clamp side edges of a bag to hang down the bag while conveying the bag along a specific conveyance path, and packaging steps comprising opening up of a bag mouth, filling of the bag with a filling material, replacing of air inside the bag with an inert gas, and sealing of the bag mouth are successively carried out during conveyance of the bag, wherein
the bag is comprised of:
a sealed part provided in a bottom edge and both side edges of the bag in which laminated films that constitute front and back faces of the bag are sealed,
a gas channel where the laminated films that constitute the front and back faces of the bag are not fused, the gas channel being formed in the sealed part, and a part of the gas channel opening into the bag, and
a gas inlet formed in one or both of laminated films constituting front and back faces of the gas channel, the gas inlet allowing the gas channel to communicate with outside of the bag; and
after the filling step of filling the bag with the filling material, a gas replacement step is performed in which an inert gas is blown through the gas inlet into the gas channel and is blown through the gas channel into the bag to replace air inside the bag with the inert gas, and then a gas inlet sealing step of sealing the gas inlet and a bag mouth sealing step of sealing the bag mouth are performed.

7. The bag packaging method according to Claim 6, wherein the gas replacement step:
places a blowing outlet of a nozzle, which is connected to an inert gas supply source, against the gas inlet, and
blows the inert gas from the gas inlet into the gas channel.

8. The bag packaging method according to Claim 7, wherein
a horn and an anvil of an ultrasonic sealing device are disposed on both sides of the bag equipped with the gas channel with the bag in between,
an inert gas channel is formed in the horn and/or the anvil so that one end of the gas channel is connected to the inert gas supply source and another end thereof opens to a distal end of the horn and/or the anvil, the horn and/or the anvil in which the inert gas channel is formed serving also as the nozzle, and the other end of the inert gas channel being used as the blowing outlet, and
in the gas replacement step, the inert gas is blown from the gas inlet into the gas channel by the horn and/or the anvil, and
the gas inlet sealing step is carried out by the horn and the anvil.

9. The bag packaging method according to any one of Claims 6 to 8, wherein
during conveyance of the bag along the conveyance path, the gas replacement step is intermittently carried out a plurality of times.

10. The bag packaging method according to any one of Claims 6 to 9, wherein
the bag mouth is pulled taut by increasing spacing between the pair of bag conveyance grippers, either after completion of the gas replacement step or during time between before start and completion of the gas replacement step.

11. The bag packaging method according to any one of Claims 6 to 10, wherein
an intermittent sealed part formation step of intermittently forming a sealed part along the bag mouth is performed near the bag mouth between the filling step and the gas replacement step.

12. A bag packaging apparatus, in which a pair of bag conveyance grippers clamp side edges of a bag to hang down the bag while conveying the bag along a specific conveyance path, and packaging steps comprising opening up of a bag mouth, filling of the bag with a filling material, replacing of air inside the bag with an inert gas, and sealing of the bag mouth are successively carried out during conveyance of the bag, wherein
the bag is comprised of:
a sealed part provided in a bottom edge and both side edges of the bag in which laminated films that constitute front and back faces of the bag are sealed,
a gas channel where the laminated films that constitute the front and back faces of the bag are not fused, the gas channel being formed in the sealed part, and a part of the gas channel opening into the bag, and
a gas inlet formed in one or both of laminated films constituting front and back faces of the gas channel, the gas inlet allowing the gas channel to communicate with outside of the bag; and
the packaging apparatus is comprised of a bag mouth opening device, a material filling device, a gas replacement device, and a bag mouth sealing device, which are disposed along the conveyance path, in which
the gas replacement device comprises a nozzle that is connected to an inert gas supply source, blows an inert gas out from a blowing outlet provided at a distal end thereof and blows the inert gas from the gas inlet into the gas channel of the bag,
the bag mouth sealing device comprises a pair of sealing members that clamp and seal the bag mouth from both sides of the bag, and
a gas inlet sealing device that seals the gas inlet of the bag after gas replacement is further disposed along the conveyance path, the gas inlet sealing device comprising a pair of sealing members that clamp and seal the gas inlet from both sides of the bag.

13. The bag packaging apparatus according to Claim 12, wherein
the gas inlet is formed in both of the laminated films constituting the front and back faces of the bag, and
the gas replacement device comprises a pair of nozzles that are disposed to face each other and connected to the inert gas supply source, thus blowing the inert gas out of the blowing outlet provided at the distal end.

14. The bag packaging apparatus according to Claim 12, wherein
the gas replacement device comprises a nozzle, which is connected to the inert gas supply source and blows the inert gas out of the blowing outlet provided at the distal end, and a receiving member, which is disposed to face the nozzle and supports the back face side of the bag.

15. The bag packaging apparatus according to any one of Claims 12 to 14, wherein
the bag mouth sealing device serves also as the gas inlet sealing device, and
the pair of sealing members of the bag mouth sealing device clamp and seal the bag mouth and the gas inlet from both sides of the bag.

16. A bag packaging method, in which a pair of bag conveyance grippers clamp side edges of a bag to hang down the bag while conveying the bag along a specific conveyance path, and packaging steps comprising opening up of a bag mouth, filling of the bag with a filling material, replacing of air inside the bag with an inert gas, and sealing of the bag mouth are successively carried out during conveyance of the bag, wherein
the bag is comprised of:
a sealed part provided in a bottom edge and both side edges of the bag in which laminated films that constitute front and back faces of the bag are sealed,
a gas channel where the laminated films that constitute the front and back faces of the bag are not fused, the gas channel being formed in the sealed part, and a part of the gas channel opening into the bag, and
a gas inlet formed in one or both of laminated films constituting front and back faces of the gas channel, the gas inlet allowing the gas channel to communicate with outside of the bag; and
the packaging apparatus is comprised of a bag mouth opening device, a material filling device, an ultrasonic sealing device, and a bag mouth sealing device, which are disposed along the conveyance path, in which
the ultrasonic sealing device is provided such that
the ultrasonic sealing device is comprised of a horn and an anvil in which an inert gas channel is formed in the horn and/or the anvil so that one end of the gas channel is connected to an inert gas supply source and an other end thereof opens to a distal end of the horn and/or the anvil,
the other end of the inert gas channel is used as a blowing outlet of the inert gas,
the inert gas is blown from the gas inlet into the gas channel by the horn and/or the anvil in which the inert gas channel is formed, and
the gas inlet is sealed by the horn and the anvil; and
the bag mouth sealing device comprises a pair of sealing members that clamp and seal the bag mouth from both sides of the bag.

17. The bag packaging apparatus according to any one of Claims 12 to 16, wherein
an intermittent sealed part formation device, which makes a sealed part formed intermittently along the bag mouth near the bag mouth, is disposed next to the material filling device along the conveyance path.
